# EUROPEAN PATENT APPLICATION

(11) **EP 4 382 289 A1**
(43) Date of publication of application: **12.06.2024**
(21) Application number: 22212521.3
(22) Date of filing: 09.12.2022
(51) Int. Cl.: B32B 5/18, B32B 5/24, B32B 27/28, B32B 27/12, B32B 27/18

(54) **LAMINATED FOAM ARTICLE AND ASSOCIATED METHOD AND ELECTRIC VEHICLE BATTERY PACK**

(71) Applicant: SHPP Global Technologies B.V., 4612 PX Bergen op Zoom (NL)
(72) Inventor: Hou, Jingqiang, Shanghai (CN); Liu, Chao, Shanghai (CN); Mao, Rui, Shanghai (CN)
(74) Representative: Balder IP Law, S.L.

(57) **Abstract**

A laminated foam article includes a foam core and fiber-reinforced skins adhered to opposing major surfaces of the foam core. The foam core includes specific amounts of a poly(phenylene ether), a polystyrene or rubber-modified polystyrene or combination thereof, a block copolymer that includes a polystyrene block and a polybutadiene block or a block copolymer that includes a polystyrene block and a hydrogenated polybutadiene block or a combination thereof, and an organophosphate flame retardant. The fiber-reinforced skins include specific amounts of reinforcing fibers and a thermoplastic skin composition. Also described is a method of forming the laminated foam article, and a battery pack that includes the laminated foam article.

## Description

### BACKGROUND OF THE INVENTION

Poly(phenylene ether) foams exhibit excellent heat resistance and flame retardancy that make them suitable for a wide variety of applications, including uses in automobiles, rail transport, air transport, and 5G communication devices. However, for some applications, poly(phenylene ether) foams exhibit inadequate flexural strength and flexural modulus. To improve these flexural properties, it is known to sandwich a poly(phenylene ether) foam sheet between two fiber-reinforced thermoplastic skins, thereby forming a laminated foam article. See, for example, Japanese Patent Application Publication No. JPH1044282 A of Fushimi, published 17 February 1998; U.S. Patent Application Publication No. US 2010/0261000 A1 of Jones, published 14 October 2010; Japanese Patent Application Publication No. JP2014208417 A of Kuwahara et al., published 6 November 2014; Japanese Patent Application Publication No. JP2017106041 A of Konno et al., published 15 June 2017; and Chinese Patent Application Publication No. CN109867942 A of W. Zhai et al., published 11 June 2019. However, there remains a need for poly(phenylene ether)-based laminated foam articles exhibiting improved flexural properties while maintaining excellent heat resistance and flame retardancy.

### BRIEF SUMMARY OF EMBODIMENTS OF THE INVENTION

One embodiment is a laminated foam article comprising: a foam core having a thickness of 2 to 40 millimeters and a density of 0.06 to 0.24 grams/centimeter³ determined according to ASTM D1622-14, and comprising a foam composition comprising, based on the total weight of the foam composition, 40 to 79 weight percent of a poly(phenylene ether); 10 to 48 weight percent of a polystyrene, a rubber-modified polystyrene, or a combination thereof; 1 to 10 weight percent of a block copolymer comprising a polystyrene block and a polybutadiene block, a block copolymer comprising a polystyrene block and a hydrogenated polybutadiene block, or a combination thereof; and 10 to 25 weight percent of an organophosphate flame retardant; wherein the sum of the weight percent values of the poly(phenylene ether), the polystyrene or rubber-modified polystyrene or combination thereof, the block copolymer, and the organophosphate flame retardant is 95 to 100 weight percent; and first and second fiber-reinforced skins adhered to opposing major surfaces of the foam core, the first and second fiber-reinforced skins independently having a thickness of 0.2 to 2 millimeters, and independently comprising, based on the total weight of the fiber-reinforced skin, 35 to 65 weight percent of reinforcing fibers selected from the group consisting of glass fibers, carbon fibers, basalt fibers, poly(*para*-phenylene terephthalamide) fibers, and combinations thereof, and 35 to 65 weight percent of a thermoplastic skin composition, the thermoplastic skin compositions of the first and second fiber-reinforced skins independently comprising, based on the total weight of the thermoplastic skin compositions, 22 to 65 weight percent of a thermoplastic resin selected from the group consisting of poly(phenylene ether)s, poly(phenylene ether)-polysiloxane block copolymers, and combinations thereof, wherein the thermoplastic resin has an intrinsic viscosity of 0.28 to 0.5 deciliter/gram determined at 25 °C in chloroform by Ubbelohde viscometer; 14 to 26 weight percent of a polystyrene, a rubber-modified polystyrene, or a combination thereof; 14 to 40 weight percent of an organophosphate flame retardant; 4 to 12 weight percent of a hydrogenated hydrocarbon resin; and 3 to 12 weight percent of a maleic anhydride-grafted polystyrene-poly(ethylene-butylene)-polystyrene triblock copolymer; wherein, independently for each of the thermoplastic skin compositions of the first and second fiber-reinforced skins, the sum of the weight percent values of the thermoplastic resin, the polystyrene or rubber-modified polystyrene or combination thereof, the organophosphate flame retardant, the hydrogenated hydrocarbon resin, and the maleic anhydride-grafted polystyrene-poly(ethylene-butylene)-polystyrene triblock copolymer is 95 to 100 weight percent.

Another embodiment is a method of forming a laminated foam article comprising: thermally laminating first and second prepregs to opposing major surfaces of a foam core to form a laminated foam article comprising the foam core and first and second fiber-reinforced skins adhered, respectively, to opposing major surfaces of the foam core; wherein the foam core has a thickness of 2 to 40 millimeters and a density of 0.06 to 0.24 grams/centimeter³ determined according to ASTM D1622-14, and comprises a foam composition comprising, based on the total weight of the foam composition, 40 to 79 weight percent of a poly(phenylene ether); 10 to 48 weight percent of a polystyrene, a rubber-modified polystyrene, or a combination thereof; 1 to 10 weight percent of a block copolymer comprising a polystyrene block and a polybutadiene block, a block copolymer comprising a polystyrene block and a hydrogenated polybutadiene block, or a combination thereof; and 10 to 25 weight percent of an organophosphate flame retardant; wherein the sum of the weight percent values of the poly(phenylene ether), the polystyrene or rubber-modified polystyrene or combination thereof, the block copolymer, and the organophosphate flame retardant is 95 to 100 weight percent; and wherein the first and second fiber-reinforced skins independently have a thickness of 0.2 to 2 millimeters, and independently comprise 35 to 65 weight percent of reinforcing fibers selected from the group consisting of glass fibers, carbon fibers, basalt fibers, poly(*para*-phenylene terephthalamide) fibers, and combinations thereof, and 35 to 65 weight percent of a thermoplastic skin composition, the thermoplastic skin compositions of the first and second fiber-reinforced skins independently comprising, based on the total weight of the thermoplastic skin compositions, 22 to 65 weight percent of a thermoplastic resin selected from the group consisting of poly(phenylene ether)s, poly(phenylene ether)-polysiloxane block copolymers, and combinations thereof, wherein the thermoplastic resin has an intrinsic viscosity of 0.28 to 0.5 deciliter/gram determined at 25 °C in chloroform by Ubbelohde viscometer; 14 to 26 weight percent of a polystyrene, a rubber-modified polystyrene, or a combination thereof; 14 to 40 weight percent of an organophosphate flame retardant; 4 to 12 weight percent of a hydrogenated hydrocarbon resin; and 3 to 12 weight percent of a maleic anhydride-grafted polystyrene-poly(ethylene-butylene)-polystyrene triblock copolymer; wherein, independently for the thermoplastic skin compositions of the first and second fiber-reinforced skins, the sum of the weight percent values of the thermoplastic resin, the polystyrene or rubber-modified polystyrene or combination thereof, the hydrogenative hydrocarbon resin, and the maleic anhydride-grafted polystyrene-poly(ethylene-butylene)-polystyrene triblock copolymer is 95 to 100 weight percent.

These and other embodiments are described in detail below.

### BRIEF DESCRIPTION OF THE DRAWINGS

In the drawings, like elements are numbered alike in several figures.
Figure 1 is a schematic illustration of a laminated foam article.
Figure 2 is a schematic illustration of an apparatus for forming a prepreg that is a precursor to a fiber-reinforced skin of the laminated foam article.
Figure 3 is a schematic illustration of an apparatus for forming the laminated foam article from a foam core and two prepregs.

### DETAILED DESCRIPTION OF THE INVENTION

The present inventors have determined that a laminated foam article prepared from the combination of a particular poly(phenylene ether)-based foam and a particular poly(phenylene ether)-based fiber-reinforced thermoplastic skin provides improved flexural properties while maintaining excellent heat resistance and flame retardancy.

Thus, one embodiment is a laminated foam article comprising: a foam core having a thickness of 2 to 40 millimeters and a density of 0.06 to 0.24 grams/centimeter³ determined according to ASTM D1622-14, and comprising a foam composition comprising, based on the total weight of the foam composition, 40 to 79 weight percent of a poly(phenylene ether); 10 to 48 weight percent of a polystyrene, a rubber-modified polystyrene, or a combination thereof; 1 to 10 weight percent of a block copolymer comprising a polystyrene block and a polybutadiene block, a block copolymer comprising a polystyrene block and a hydrogenated polybutadiene block, or a combination thereof; and 10 to 25 weight percent of an organophosphate flame retardant; wherein the sum of the weight percent values of the poly(phenylene ether), the polystyrene or rubber-modified polystyrene or combination thereof, the block copolymer, and the organophosphate flame retardant is 95 to 100 weight percent; and first and second fiber-reinforced skins adhered to opposing major surfaces of the foam core, the first and second fiber-reinforced skins independently having a thickness of 0.2 to 2 millimeters, and independently comprising, based on the total weight of the fiber-reinforced skin, 35 to 65 weight percent of reinforcing fibers selected from the group consisting of glass fibers, carbon fibers, basalt fibers, poly(*para*-phenylene terephthalamide) fibers, and combinations thereof, and 35 to 65 weight percent of a thermoplastic skin composition, the thermoplastic skin compositions of the first and second fiber-reinforced skins independently comprising, based on the total weight of the thermoplastic skin compositions, 22 to 65 weight percent of a thermoplastic resin selected from the group consisting of poly(phenylene ether)s, poly(phenylene ether)-polysiloxane block copolymers, and combinations thereof, wherein the thermoplastic resin has an intrinsic viscosity of 0.28 to 0.5 deciliter/gram determined at 25 °C in chloroform by Ubbelohde viscometer; 14 to 26 weight percent of a polystyrene, a rubber-modified polystyrene, or a combination thereof; 14 to 40 weight percent of an organophosphate flame retardant; 4 to 12 weight percent of a hydrogenated hydrocarbon resin; and 3 to 12 weight percent of a maleic anhydride-grafted polystyrene-poly(ethylene-butylene)-polystyrene triblock copolymer; wherein, independently for each of the thermoplastic skin compositions of the first and second fiber-reinforced skins, the sum of the weight percent values of the thermoplastic resin, the polystyrene or rubber-modified polystyrene or combination thereof, the organophosphate flame retardant, the hydrogenated hydrocarbon resin, and the maleic anhydride-grafted polystyrene-poly(ethylene-butylene)-polystyrene triblock copolymer is 95 to 100 weight percent.

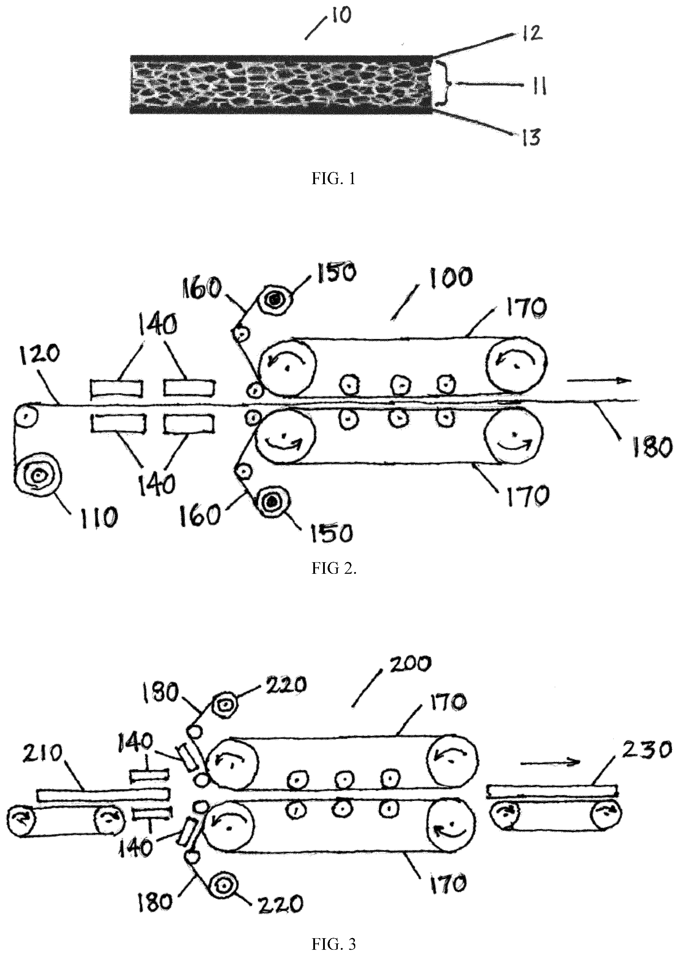

Figure 1 is a schematic illustration of laminated foam article 10 comprising foam core 11, first fiber-reinforced skin 12, and second fiber-reinforced skin 13.

The laminated foam article is the product of laminating first and second fiber-reinforced skins to opposing major faces of a foam core. The foam core has a thickness of 2 to 40 millimeters. Within this range, the thickness can be 4 to 20 millimeters, or 4 to 16 millimeters. The foam core also has a density of 0.06 to 0.24 grams/centimeter³, determined according to ASTM D1622-14. Within this range, the density can be 0.06 to 0.20 grams/centimeter³, or 0.08 to 0.16 grams/centimeter³.

The foam core comprises a foam composition comprising, based on the total weight of the foam composition, 40 to 79 weight percent of a poly(phenylene ether); 10 to 48 weight percent of a polystyrene, a rubber-modified polystyrene, or a combination thereof; 1 to 10 weight percent of a block copolymer comprising a polystyrene block and a polybutadiene block, a block copolymer comprising a polystyrene block and a hydrogenated polybutadiene block, or a combination thereof; and 10 to 25 weight percent of an organophosphate flame retardant; wherein the sum of the weight percent values of the poly(phenylene ether), the polystyrene or rubber-modified polystyrene or combination thereof, the block copolymer, and the organophosphate flame retardant is 95 to 100 weight percent.

The foam composition comprises a poly(phenylene ether). In general, poly(phenylene ether)s are polymers comprising repeating structural units having the formula 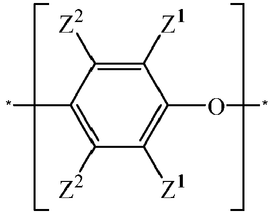 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl," whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

The poly(phenylene ether) can comprise molecules having aminoalkyl-containing end group(s), typically located in a position ortho to the hydroxyl group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, as well as combinations thereof.

In some embodiments, the poly(phenylene ether) present in the foam composition has an intrinsic viscosity of 0.42 to 0.50 deciliter/gram determined at 25 °C in chloroform by Ubbelohde viscometer. In some embodiments, the poly(phenylene ether) present in the foam composition comprises a poly(2,6-dimethyl-1,4-phenylene ether) having an intrinsic viscosity of 0.42 to 0.50 deciliter/gram determined at 25 °C in chloroform by Ubbelohde viscometer.

The foam composition comprises the poly(phenylene ether) in an amount of 40 to 70 weight percent, based on the total weight of the foam composition. Within this range, the poly(phenylene ether) amount can be 40 to 65 weight percent, or 40 to 60 weight percent, or 45 to 55 weight percent.

In addition to the poly(phenylene ether), the foam composition comprises a polystyrene, a rubber-modified polystyrene, or a combination thereof. As used herein, the term "polystyrene" refers to a homopolymer of styrene. The polystyrene can be atactic, syndiotactic, or isotactic. In some embodiments, the polystyrene is atactic. Rubber-modified polystyrene, sometimes referred to as high-impact polystyrene or HIPS, comprises, based on the weight of the rubber-modified polystyrene, 80 to 98 weight percent polystyrene and 2 to 20 weight percent polybutadiene. Within the range of 80 to 98 weight percent, the polystyrene amount can be 82 to 96 weight percent, or 84 to 94 weight percent. Within the range of 2 to 20 weight percent, the polybutadiene amount can be 4 to 18 weight percent, or 6 to 16 weight percent. In some embodiments, the polybutadiene comprises, based on 100 (mole) percent total of *cis* and *trans* double bonds, 85 to 100 percent *cis* double bonds and 0 to 15 percent *trans* double bonds. Within the range of 85 to 100 percent, the amount of *cis* double bonds can be 90 to 100 percent, or 95 to 100 percent, with the balance being *trans* double bonds. In some embodiments, the polystyrene, rubber-modified polystyrene, or combination thereof consists of rubber-modified polystyrene.

The foam composition comprises the polystyrene, rubber-modified polystyrene, or combination thereof in an amount of 10 to 48 weight percent, based on the total weight of the foam composition. Within this range, the amount of polystyrene, rubber-modified polystyrene, or a combination thereof is 15 to 40 weight percent, or 25 to 30 weight percent.

In addition to the poly(phenylene ether), and the polystyrene, rubber-modified polystyrene, or combination thereof, the foam composition comprises a block copolymer comprising a polystyrene block and a polybutadiene block, a block copolymer comprising a polystyrene block and a hydrogenated polybutadiene block, or a combination thereof. The block copolymer comprising a polystyrene block and a polybutadiene block comprises at least one polystyrene block and at least one polybutadiene block. In some embodiments, it is a diblock copolymer comprising one polystyrene block and one polybutadiene block. In other embodiments, it is a triblock copolymer comprising two polystyrene blocks and one polybutadiene block. In the block copolymer comprising a polystyrene block and a polybutadiene block, the one or more polybutadiene blocks are unhydrogenated. The block copolymer comprising a polystyrene block and a polybutadiene block can comprise 15 to 50 weight percent polystyrene and 50 to 85 weight percent polybutadiene, based on the weight of the block copolymer comprising a polystyrene block and a polybutadiene block. Within the range of 15 to 50 weight percent, the polystyrene content can be 20 to 40 weight percent, or 25 to 35 weight percent. Within the range of 50 to 85 weight percent, the polybutadiene amount can be 60 to 80 weight percent, or 65 to 75 weight percent.

In the block copolymer comprising a polystyrene block and a hydrogenated polybutadiene block, the one or more polybutadiene blocks are hydrogenated and sometimes referred to as poly(ethylene-butylene) blocks. The block copolymer comprising a polystyrene block and a hydrogenated polybutadiene block comprises at least one polystyrene block and at least one hydrogenated polybutadiene block. In some embodiments, it is a diblock copolymer comprising one polystyrene block and one hydrogenated polybutadiene block. In other embodiments, it is a triblock copolymer comprising two polystyrene blocks and one hydrogenated polybutadiene block.

The block copolymer comprising a polystyrene block and a hydrogenated polybutadiene block can comprise 15 to 50 weight percent polystyrene and 50 to 85 weight percent poly(ethylene-butylene), based on the weight of the block copolymer comprising a polystyrene block and a polybutadiene block. Within the range of 15 to 50 weight percent, the polystyrene content can be 20 to 40 weight percent, or 25 to 35 weight percent. Within the range of 50 to 85 weight percent, the poly(ethylene-butylene) amount can be 60 to 80 weight percent, or 65 to 75 weight percent.

In some embodiments, the block copolymer comprising a polystyrene block and a polybutadiene block, block copolymer comprising a polystyrene block and a hydrogenated polybutadiene block, or combination thereof consists of the block copolymer comprising a polystyrene block and a polybutadiene block. In some embodiments, the block copolymer comprising a polystyrene block and a polybutadiene block, block copolymer comprising a polystyrene block and a hydrogenated polybutadiene block, or combination thereof consists of a polystyrene-polybutadiene-polystyrene triblock copolymer having a polystyrene content of 20 to 40 weight percent and a polybutadiene content of 60 to 80 weight percent, based on the weight of the polystyrene-polybutadiene-polystyrene triblock copolymer.

The foam composition comprises the block copolymer comprising a polystyrene block and a polybutadiene block, block copolymer comprising a polystyrene block and a hydrogenated polybutadiene block, or combination thereof in an amount of 1 to 10 weight percent, based on the total weight of the foam composition. Within this range, the amount can be 1 to 6 weight percent, or 1 to 4 weight percent.

In addition to the poly(phenylene ether), the polystyrene or rubber-modified polystyrene or combination thereof, and the block copolymer comprising a polystyrene block and a polybutadiene block or the block copolymer comprising a polystyrene block and a hydrogenated polybutadiene block, the foam composition comprises an organophosphate flame retardant. Exemplary organophosphate flame retardants include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In some embodiments, the organophosphate flame retardant is selected from the group consisting of *tris*(alkylphenyl) phosphates (for example, CAS Reg. No. 89492-23-9 or CAS Reg. No. 78-33-1), resorcinol *bis*(diphenyl phosphate) (CAS Reg. No. 57583-54-7), bisphenol A *bis*(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), tert-butylphenyl diphenyl phosphates (CAS Reg. No. 56803-37-3), *bis*(*t-*butylphenyl) phenyl phosphates (CAS Reg. No. 65652-41-7), *tris*(t-butylphenyl) phosphates (CAS Reg. No. 78-33-1), and combinations thereof. In some embodiments the organophosphate flame retardant comprises resorcinol *bis*(diphenyl phosphate), bisphenol A *bis*(diphenyl phosphate), or a combination thereof. In some embodiments the organophosphate flame retardant comprises resorcinol *bis*(diphenyl phosphate).

The foam composition comprises the organophosphate flame retardant in an amount of 10 to 25 weight percent, based on the total weight of the foam composition. Within this range, the organophosphate flame retardant amount can be 12 to 22 weight percent, or 14 to 20 weight percent.

In the foam composition, the sum of the weight percent values of the poly(phenylene ether), the polystyrene or rubber-modified polystyrene or combination thereof, the block copolymer, and the organophosphate flame retardant is 95 to 100 weight percent, based on the total weight of foam composition. Within this range, the sum can be 97 to 100 weight percent, or 98 to 100 weight percent, or 98.5 to 100 weight percent.

In some embodiments, the foam composition comprises 45 to 55 weight percent of a poly(2,6-dimethyl-1,4-phenylene ether) having an intrinsic viscosity of 0.42 to 0.50 deciliter/gram determined at 25 °C in chloroform by Ubbelohde viscometer; 25 to 35 weight percent of the rubber-modified polystyrene; 1 to 5 weight percent of a polystyrene-polybutadiene-polystyrene triblock; and 12 to 22 weight percent of the organophosphate flame retardant.

In addition to the foam core, the laminated foam article comprises first and second fiber-reinforced skins adhered to opposing major surfaces of the foam core. The first and second fiber-reinforced skins independently having a thickness of 0.2 to 2 millimeters. While it may be possible to determine the thickness of the first and second fiber-reinforced skins after they are adhered to the foam core, the specified thickness is based on the first and second fiber-reinforced skins before they are adhered to the foam core. Within the range of 0.2 to 2 millimeters, the first and second fiber-reinforced skins can, independently, have a thickness of 0.3 to 1.5 millimeters, or 0.3 to 1 millimeter. For simplicity, the terms "first fiber-reinforced skin" and "second fiber-reinforced skin" are used to refer to the fiber-reinforced skins both before and after lamination to the foam core. To the extent that it is necessary to distinguish a fiber-reinforced skin before lamination from a fiber-reinforced skin after lamination, the fiber-reinforced skin before lamination can be referred to as a "prepreg."

The first and second fiber-reinforced skins independently comprise a skin composition comprising, based respectively on the total weight of each of the first and second fiber-reinforced skins, 35 to 65 weight percent of reinforcing fibers selected from the group consisting of glass fibers, carbon fibers, basalt fibers, poly(*para*-phenylene terephthalamide) fibers, and combinations thereof, and 35 to 65 weight percent of a thermoplastic skin composition. Within the range of 35 to 65 weight percent, the reinforcing fiber amount can be, independently for the first and second fiber reinforced skins, 40 to 60 weight percent, or 45 to 55 weight percent. Within the range of 35 to 65 weight percent, the thermoplastic skin composition amount can be, independently for the first and second fiber reinforced skins, 40 to 60 weight percent, or 45 to 55 weight percent.

The reinforcing fibers of the first and second fiber-reinforced skins are selected from the group consisting of glass fibers, carbon fibers, basalt fibers, poly(*para*-phenylene terephthalamide) fibers, and combinations thereof. In some embodiments, the reinforcing fibers are glass fibers, carbon fibers, and combinations thereof. In some embodiments, the reinforcing fibers comprise glass fibers. The reinforcing fibers can be provided in the form of a fiber fabric, such as a woven or non-woven fiber fabric. In some embodiments, the reinforcing fibers are provided in the form of a woven glass fiber fabric. The reinforcing fibers can have a diameter of 4 to 40 micrometers, or 6 to 20 micrometers. The reinforcing fibers can have a length of 1 to 1000 millimeters, or 5 to 500 micrometers, or, especially in the case of a woven fiber fabric, the fibers can be essentially continuous.

The thermoplastic skin compositions of the first and second fiber-reinforced skins, sometimes referred to herein as the first and second thermoplastic skin compositions, independently comprise a thermoplastic resin selected from the group consisting of poly(phenylene ether)s, poly(phenylene ether)-polysiloxane block copolymers, and combinations thereof, wherein the thermoplastic resin has an intrinsic viscosity of 0.28 to 0.5 deciliter/gram determined at 25 °C in chloroform by Ubbelohde viscometer; a polystyrene or rubber-modified polystyrene or combination thereof; an organophosphate flame retardant; a hydrogenated hydrocarbon resin; and a maleic anhydride-grafted polystyrene-poly(ethylenebutylene)-polystyrene triblock copolymer.

The first and second thermoplastic skin compositions each comprise a thermoplastic resin selected from the group consisting of poly(phenylene ether)s, poly(phenylene ether)-polysiloxane block copolymers, and combinations thereof, wherein the thermoplastic resin has an intrinsic viscosity of 0.28 to 0.5 deciliter/gram, or 0.28 to 0.43 deciliter/gram, determined at 25 °C in chloroform by Ubbelohde viscometer. Poly(phenylene ether)s are generally described above in the context of the foam composition. As used herein, the term "poly(phenylene ether)-polysiloxane block copolymer" refers to a block copolymer comprising at least one poly(phenylene ether) block and at least one polysiloxane block. In some embodiments, the poly(phenylene ether)-polysiloxane block copolymer is prepared by an oxidative copolymerization method. In this method, the poly(phenylene ether)-polysiloxane block copolymer is the product of a process comprising oxidatively copolymerizing a monomer mixture comprising a monohydric phenol and a hydroxyaryl-terminated polysiloxane. In some embodiments, the monomer mixture comprises 70 to 99 parts by weight of the monohydric phenol and 1 to 30 parts by weight of the hydroxyaryl-terminated polysiloxane, based on the total weight of the monohydric phenol and the hydroxyaryl-terminated polysiloxane. The hydroxyaryl-diterminated polysiloxane can comprise a plurality of repeating units having the structure 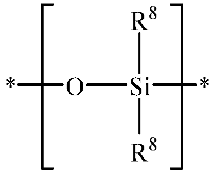 wherein each occurrence of R⁸ is independently hydrogen, C₁-C₁₂ hydrocarbyl or C₁-C₁₂ halohydrocarbyl; and two terminal units having the structure 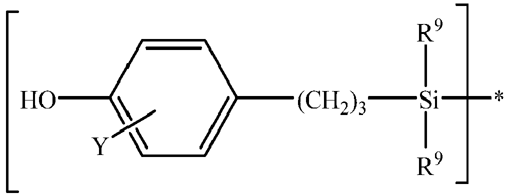 wherein Y is hydrogen, C₁-C₁₂ hydrocarbyl, C₁-C₁₂ hydrocarbyloxy, or halogen, and wherein each occurrence of R⁹ is independently hydrogen, C₁-C₁₂ hydrocarbyl or C₁-C₁₂ halohydrocarbyl. In a very specific embodiment, each occurrence of R⁸ and R⁹ is methyl, and Y is methoxyl. In some embodiments, the monohydric phenol comprises 2,6-dimethylphenol, and a hydroxyaryl-terminated polysiloxane having the structure 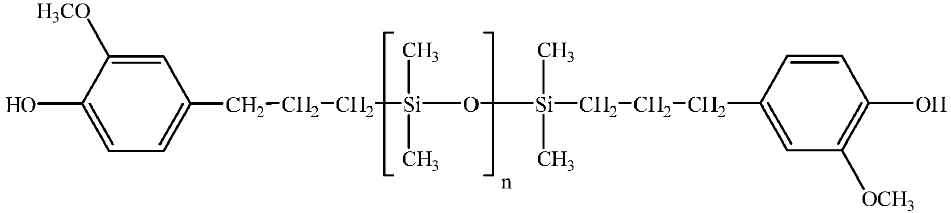 wherein n is, on average, 5 to 100, specifically 30 to 60. The oxidative copolymerization method produces poly(phenylene ether)-polysiloxane block copolymer as the desired product and poly(phenylene ether) (without an incorporated polysiloxane block) as a by-product. It is not necessary to separate the poly(phenylene ether) from the poly(phenylene ether)-polysiloxane block copolymer. The poly(phenylene ether)-polysiloxane block copolymer can thus be utilized as a "reaction product" that includes both the poly(phenylene ether) and the poly(phenylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(phenylene ether)-polysiloxane block copolymer. Detailed methods for forming poly(phenylene ether)-polysiloxane block copolymers are described in U.S. Patent No. 8,017,697 to Carrillo et al., and U.S. Patent Application Publication No. US 2012/0329961 A1 of Carrillo et al.

The thermoplastic resin has an intrinsic viscosity of 0.28 to 0.5 deciliter/gram determined at 25 °C in chloroform by Ubbelohde viscometer. Within this range, the intrinsic viscosity can be 0.28 to 0.43 deciliter/gram, or 0.3 to 0.43 deciliter/gram, or 0.33 to 0.43 deciliter/gram. In some embodiments, the thermoplastic resin comprises a poly(2,6-dimethyl-1,4-phenylene ether) having an intrinsic viscosity of 0.3 to 0.45 deciliter/gram or 0.35 to 0.45 deciliter/gram, determined at 25 °C in chloroform by Ubbelohde viscometer. In some embodiments, the thermoplastic resin consists of a poly(2,6-dimethyl-1,4-phenylene ether) having an intrinsic viscosity of 0.3 to 0.45 deciliter/gram or 0.35 to 0.45 deciliter/gram, determined at 25 °C in chloroform by Ubbelohde viscometer.

The first and second thermoplastic skin compositions independently comprise the thermoplastic resin in an amount of 25 to 65 weight percent, based on the respective total weights of each of the first and second thermoplastic skin compositions. Within this range, the thermoplastic resin amount can be, independently for the first and second thermoplastic skin compositions, 30 to 60 weight percent, or 35 to 55 weight percent, or 37 to 50 weight percent.

In addition to the thermoplastic resin, the first and second thermoplastic skin compositions comprise a polystyrene or a rubber-modified polystyrene or a combination thereof. Polystyrenes and rubber-modified polystyrenes are generally described above in the context of the foam composition. In some embodiments, the first and second thermoplastic skin compositions independently comprise a rubber-modified polystyrene comprising 80 to 98 weight percent polystyrene and 2 to 20 weight percent polybutadiene. Within the range of 80 to 98 weight percent, the polystyrene amount can be 82 to 96 weight percent, or 84 to 94 weight percent. Within the range of 2 to 20 weight percent, the polybutadiene amount can be 4 to 18 weight percent, or 6 to 16 weight percent.

The first and second thermoplastic skin compositions independently comprise the polystyrene or rubber-modified polystyrene or combination thereof in an amount of 14 to 26 weight percent, based on the respective total weights of each of the first and second thermoplastic skin compositions. Within this range, the amount of the polystyrene or rubber-modified polystyrene or combination thereof can be 16 to 24 weight percent.

In addition to the thermoplastic resin and the polystyrene or rubber-modified polystyrene or combination thereof, the first and second thermoplastic skin compositions each comprise an organophosphate flame retardant. Organophosphate flame retardants are generally described above in the context of the foam composition. In some embodiments, the organophosphate flame retardant employed in the first and second thermoplastic skin compositions is resorcinol *bis*(diphenyl phosphate), bisphenol A *bis*(diphenyl phosphate), or a combination thereof. In some embodiments the organophosphate flame retardant comprises bisphenol A *bis*(diphenyl phosphate).

The first and second thermoplastic skin compositions independently comprise the organophosphate flame retardant in an amount of 14 to 40 weight percent, based on the respective total weights of each of the first and second thermoplastic skin compositions. Within this range, the organophosphate flame retardant amount can be 15 to 37 weight percent, or 20 to 35 weight percent, or 20 to 30 weight percent.

In addition to the thermoplastic resin, the polystyrene or rubber-modified polystyrene or combination thereof, and the organophosphate flame retardant, the first and second thermoplastic skin compositions each comprise a hydrogenated hydrocarbon resin. As used herein, the term "hydrogenated hydrocarbon resin" refers to a hydrogenated homopolymer or copolymer of a C₆-C₂₀ olefin. Examples include hydrogenated copolymers of two or more of styrene, *alpha*-methylstyrene, *ortho*-methylstyrene, meta-methylstyrene, para-methylstyrene, and indene. In some embodiments, the hydrogenated hydrocarbon resin has a softening point of 105 to 145 °C, determined according to ASTM E28-18. Within this range, the softening point can be 115 to 135 °C, or 120 to 130 °C. Suitable hydrogenated hydrocarbon resins include, for example, ARKON^{™} P-115, ARKON^{™} P-125, and ARKON^{™} P-140, from Arakawa Chemical Industries, Ltd. In some embodiments, the hydrogenated hydrocarbon resin has a number average molecular weight of 400 to 4,000 grams/mole, or 700 to 2500 grams/mole, or 800 to 1500 grams/mole, determined by gel permeation chromatography using polyethylene standards.

The first and second thermoplastic skin compositions independently comprise the hydrogenated hydrocarbon resin in an amount of 4 to 12 weight percent, based on the respective total weights of each of the first and second thermoplastic skin compositions. Within this range, the hydrogenated hydrocarbon resin amount can be 5 to 12 weight percent, or 5 to 11 weight percent.

In addition to the thermoplastic resin, the polystyrene or rubber-modified polystyrene or combination thereof, the organophosphate flame retardant, and the hydrogenated hydrocarbon resin, the first and second thermoplastic skin compositions each comprise a maleic anhydride-grafted polystyrene-poly(ethylene-butylene)-polystyrene triblock copolymer. As used herein, the term "maleic anhydride-grafted polystyrene-poly(ethylene-butylene)-polystyrene triblock copolymer" refers to the reaction product of grafting maleic anhydride to the poly(ethylene-butylene) midblock of a polystyrene-poly(ethylene-butylene)-polystyrene triblock copolymer. In some embodiments, the maleic anhydride-grafted polystyrene-poly(ethylenebutylene)-polystyrene triblock copolymer has a polystyrene content of 15 to 45 weight percent and a bound maleic anhydride content of 0.5 to 4 weight percent, based on the total weight of the maleic anhydride-grafted polystyrene-poly(ethylene-butylene)-polystyrene triblock copolymer. Within the range of 15 to 45 weight percent, the polystyrene content can be 20 to 40 weight percent, or 25 to 35 weight percent. Within the range of 0.5 to 4 weight percent, the bound maleic anhydride content can be 0.8 to 3 weight percent, or 1 to 2.5 weight percent. Suitable maleic anhydride-grafted polystyrene-poly(ethylene-butylene)-polystyrene triblock copolymers include, for example, KRATON^{™} FG1901 and KRATON^{™} FG1924 from Kraton Corporation.

The first and second thermoplastic skin compositions independently comprise the maleic anhydride-grafted polystyrene-poly(ethylene-butylene)-polystyrene triblock copolymer in an amount of 3 to 12 weight percent, based on the respective total weights of each of the first and second thermoplastic skin compositions. Within the range, the amount of the maleic anhydride-grafted polystyrene-poly(ethylene-butylene)-polystyrene triblock copolymer can be 3 to 11 weight percent, or 4 to 10 weight percent.

For each of the first and second thermoplastic skin compositions, the sum of the weight percent values of the thermoplastic resin, the polystyrene or rubber-modified polystyrene or combination thereof, the organophosphate flame retardant, the hydrogenated hydrocarbon resin, and the maleic anhydride-grafted polystyrene-poly(ethylene-butylene)-polystyrene triblock copolymer is 95 to 100 weight percent, or 96 to 100 weight percent, or 97 to 100 weight percent, or 98 to 100 weight percent.

In some embodiments, the first and second thermoplastic skin compositions comprise zero to 1 weight percent, or zero to 0.5 weight percent, or zero to 0.1 weight percent, or zero weight percent of block copolymers comprising a polystyrene block and a polybutadiene block, based on the respective total weights of the first and second thermoplastic skin compositions.

In some embodiments, the first and second thermoplastic skin compositions comprise zero to 1 weight percent, or zero to 0.5 weight percent, or zero to 0.1 weight percent, or zero weight percent of homopolystyrene, based on the respective total weights of the first and second thermoplastic skin compositions.

In a very specific embodiment of the laminated foam article, the reinforcing fibers are in the form of a woven glass fiber fabric; and the thermoplastic skin compositions of the first and second fiber-reinforced skins independently comprise 30 to 50 weight percent of the thermoplastic resin; 16 to 24 weight percent of the rubber-modified polystyrene; 20 to 35 weight percent of the organophosphate flame retardant; 5 to 12 weight percent of the hydrogenated hydrocarbon resin; and 3 to 11 weight percent of the maleic anhydride-grafted polystyrene-poly(ethylene-butylene)-polystyrene triblock copolymer; wherein the thermoplastic resin comprises a poly(2,6-dimethyl-1,4-phenylene ether) having an intrinsic viscosity of 0.3 to 0.43 deciliter/gram determined at 25 °C in chloroform by Ubbelohde viscometer; wherein the rubber-modified polystyrene comprises 80 to 95 weight percent of polystyrene and 5 to 20 weight percent of polybutadiene, based on the total weight of the rubber-modified polystyrene; wherein the hydrogenated hydrocarbon resin comprises a hydrogenated poly(C₆-C₂₀-olefin) having a number average molecular weight of 400 to 4,000 grams/mole, determined by gel permeation chromatography using polyethylene standards; and wherein the maleic anhydride-grafted polystyrene-poly(ethylene-butylene)-polystyrene triblock copolymer has a polystyrene content of 15 to 45 weight percent and a bound maleic anhydride content of 0.5 to 4 weight percent, based on the total weight of the maleic anhydride-grafted polystyrene-poly(ethylene-butylene)-polystyrene triblock copolymer. In a variation of this very specific embodiment, the foam composition comprises 45 to 55 weight percent of a poly(2,6-dimethyl-1,4-phenylene ether) having an intrinsic viscosity of 0.42 to 0.50 deciliter/gram determined at 25 °C in chloroform by Ubbelohde viscometer; 25 to 35 weight percent of a rubber-modified polystyrene; 1 to 5 weight percent of a block copolymer (i.e., an unhydrogenated block copolymer) comprising a polystyrene block and a polybutadiene block; and 12 to 22 weight percent of the organophosphate flame retardant.

The invention includes a method of forming a laminated foam article. As noted above, the terms "first fiber-reinforced skin" and "second fiber-reinforced skin" are used to refer to the fiber-reinforced skins both before and after lamination to the foam core. To the extent that it is necessary to distinguish a fiber-reinforced skin before lamination from a fiber-reinforced skin after lamination, the fiber-reinforced skin before lamination can be referred to as a "prepreg." The method of forming a laminated foam article comprises: thermally laminating first and second prepregs to opposing major surfaces of a foam core to form a laminated foam article comprising the foam core and first and second fiber-reinforced skins (derived from the first and second prepregs, respectively) adhered, respectively, to opposing major surfaces of the foam core; wherein the foam core has a thickness of 2 to 40 millimeters and a density of 0.06 to 0.24 grams/centimeter³ determined according to ASTM D1622-14, and comprises a foam composition comprising, based on the total weight of the foam composition, 40 to 79 weight percent of a poly(phenylene ether); 10 to 48 weight percent of a polystyrene, a rubber-modified polystyrene, or a combination thereof; 1 to 10 weight percent of a block copolymer comprising a polystyrene block and a polybutadiene block, a block copolymer comprising a polystyrene block and a hydrogenated polybutadiene block, or a combination thereof; and 10 to 25 weight percent of an organophosphate flame retardant; wherein the sum of the weight percent values of the poly(phenylene ether), the polystyrene or rubber-modified polystyrene or combination thereof, the block copolymer, and the organophosphate flame retardant is 95 to 100 weight percent; and wherein the first and second prepregs independently have a thickness of 0.2 to 2 millimeters, and independently comprise 35 to 65 weight percent of reinforcing fibers selected from the group consisting of glass fibers, carbon fibers, basalt fibers, poly(*para*-phenylene terephthalamide) fibers, and combinations thereof, and 35 to 65 weight percent of a thermoplastic skin composition, the thermoplastic skin compositions of the first and second prepregs independently comprising, based on the total weight of the thermoplastic skin compositions, 22 to 65 weight percent of a thermoplastic resin selected from the group consisting of poly(phenylene ether)s, poly(phenylene ether)-polysiloxane block copolymers, and combinations thereof, wherein the thermoplastic resin has an intrinsic viscosity of 0.28 to 0.5 deciliter/gram, or 0.28 to 0.43 deciliter/gram determined at 25 °C in chloroform by Ubbelohde viscometer; 14 to 26 weight percent of a polystyrene or rubber-modified polystyrene or combination thereof; 14 to 40 weight percent of an organophosphate flame retardant; 4 to 12 weight percent of a hydrogenated hydrocarbon resin; and 3 to 12 weight percent of a maleic anhydride-grafted polystyrene-poly(ethylene-butylene)-polystyrene triblock copolymer; wherein, independently for each of the thermoplastic skin compositions of the first and second prepregs, the sum of the weight percent values of the thermoplastic resin, the polystyrene or rubber-modified polystyrene or combination thereof, the organophosphate flame retardant, the hydrogenated hydrocarbon resin, and the maleic anhydride-grafted polystyrene-poly(ethylene-butylene)-polystyrene triblock copolymer is 95 to 100 weight percent.

Figure 2 is a schematic illustration of an apparatus for forming a prepreg that can be the first prepreg and/or the second prepreg. Prepreg-forming apparatus 100 includes a fiber fabric roll 110 which is unwound to yield fiber fabric single layer 120. Fiber fabric single layer 120 is pre-heated via infrared heaters 140 before being laminated to two layers of thermoplastic film 160 to form the prepreg. Thermoplastic film single layer 160 is unwound from thermoplastic film roll 150 and laminated to fiber fabric single layer 120 in a heated double belt press comprising two heated steel belts 170 to form prepreg 180.

Figure 3 is a schematic illustration of an apparatus for forming the laminated foam article from a foam core and two prepregs. Laminate forming apparatus 200 transforms foamed sheet 210 to laminated foam article 230 via lamination with two prepregs 180. Specifically, foam sheet 210 and two prepregs 180 (i.e., first and second prepregs) are pre-heated via infrared heaters 140 before being laminated via two heated steel belts 170 to form the laminated foam article 230.

All of the variations described above in the context of the laminated foam article apply as well to the method of forming the laminated foam article. For example, in some embodiments of the method, the reinforcing fibers of the first and second prepregs are in the form of a woven fiber fabric. As another example, in some embodiments of the method, the reinforcing fibers are in the form of a woven glass fiber fabric.

In some embodiments of the method, the thermally laminating the first and second prepregs to opposing major surfaces of a foam core comprises contacting the first and second prepregs, respectively, with opposing major surfaces of the foam core to form a sandwich structure (with the two prepregs being outer layers in contact with but not yet adhered to the inner foam core); and exposing the sandwich structure to a temperature of 250 to 290 °C and a pressure of 0.8 to 3.2 megapascals for a time of 5 to 50 seconds to adhere the first and second prepregs to the foam core, thereby forming the laminated foam article. Within the range of 250 to 290 °C, the temperature can be 260 to 280 °C. Within the range of 0.8 to 3.2 megapascals, the pressure can be 1 to 3 megapascals, or 1 to 2 megapascals. Within the range of 5 to 50 seconds, the time can be 10 to 30 seconds, or 10 to 20 seconds.

In some embodiments of the method, the foam composition comprises 45 to 55 weight percent of a poly(2,6-dimethyl-1,4-phenylene ether) having an intrinsic viscosity of 0.42 to 0.50 deciliter/gram determined at 25 °C in chloroform by Ubbelohde viscometer; 25 to 35 weight percent of a rubber-modified polystyrene; 1 to 5 weight percent of a block copolymer (i.e., an unhydrogenated block copolymer) comprising a polystyrene block and a polybutadiene block; and 12 to 22 weight percent of the organophosphate flame retardant.

In some embodiments of the method, the thermoplastic resin of the first and second fiber-reinforced skins is a poly(2,6-dimethyl-1,4-phenylene ether) having an intrinsic viscosity of 0.3 to 0.45 deciliter/gram determined at 25 °C in chloroform by Ubbelohde viscometer. Within this range, the intrinsic viscosity can be 0.35 to 0.45 deciliter/gram.

In some embodiments of the method, the hydrogenated hydrocarbon resin comprises a hydrogenated poly(C₆-C₂₀-olefin) having a softening point of 105 to 145 °C, determined according to ASTM E28-18. Within this range, the softening point can be 115 to 135 °C, or 120 to 130 °C.

In some embodiments of the method, the maleic anhydride-grafted polystyrene-poly(ethylene-butylene)-polystyrene triblock copolymer of the first and second thermoplastic skin compositions independently has a polystyrene content of 15 to 45 weight percent and a bound maleic anhydride content of 0.5 to 4 weight percent, based on the total weight of the maleic anhydride-grafted polystyrene-poly(ethylene-butylene)-polystyrene triblock copolymer. Within the range of 15 to 45 weight percent, the polystyrene content can be 20 to 40 weight percent, or 25 to 35 weight percent. Within the range of 0.5 to 4 weight percent, the bound maleic anhydride content can be 0.8 to 3 weight percent, or 1 to 2.5 weight percent.

In a very specific embodiment of the method, the reinforcing fibers are in the form of a woven glass fiber fabric; the thermoplastic skin compositions of the first and second fiber-reinforced skins independently comprise 30 to 50 weight percent of the thermoplastic resin; 16 to 24 weight percent of the rubber-modified polystyrene; 20 to 35 weight percent of the organophosphate flame retardant; 5 to 12 weight percent of the hydrogenated hydrocarbon resin; and 3 to 11 weight percent of the maleic anhydride-grafted polystyrene-poly(ethylene-butylene)-polystyrene triblock copolymer; the thermoplastic resin comprises a poly(2,6-dimethyl-1,4-phenylene ether) having an intrinsic viscosity of 0.3 to 0.43 deciliter/gram determined at 25 °C in chloroform by Ubbelohde viscometer; the rubber-modified polystyrene comprises 80 to 95 weight percent of polystyrene and 5 to 20 weight percent of polybutadiene, based on the total weight of the rubber-modified polystyrene; the hydrogenated hydrocarbon resin comprises a hydrogenated poly(C₆-C₂₀-olefin) having a number average molecular weight of 400 to 4,000 grams/mole, determined by gel permeation chromatography using polyethylene standards; and wherein the maleic anhydride-grafted polystyrene-poly(ethylene-butylene)-polystyrene triblock copolymer has a polystyrene content of 15 to 45 weight percent and a bound maleic anhydride content of 0.5 to 4 weight percent, based on the total weight of the maleic anhydride-grafted polystyrene-poly(ethylene-butylene)-polystyrene triblock copolymer. In a variation of this very specific embodiment, the foam composition comprises 45 to 55 weight percent of a poly(2,6-dimethyl-1,4-phenylene ether) having an intrinsic viscosity of 0.42 to 0.50 deciliter/gram determined at 25 °C in chloroform by Ubbelohde viscometer; 25 to 35 weight percent of a rubber-modified polystyrene; 1 to 5 weight percent of a block copolymer (i.e., an unhydrogenated block copolymer) comprising a polystyrene block and a polybutadiene block; and 12 to 22 weight percent of the organophosphate flame retardant.

In some embodiments, the thermoplastic skin compositions of the first and second fiber-reinforced skins comprise zero to 1 weight percent of block copolymers comprising a polystyrene block and a polybutadiene block. In some embodiments, the thermoplastic skin compositions of the first and second fiber-reinforced skins comprise zero to 1 weight percent of homopolystyrenes.

The invention includes an electric vehicle battery pack comprising an electric battery and the laminated foam article in any of the variations described herein. The term electric vehicle battery pack includes articles in which the laminated foam article is interior to the electric battery, or exterior to but associated with the electric battery. In the electric vehicle battery pack, the laminated foam article can provide one or more of physical protection to the battery, thermal protection to the battery, and flame retardancy to the battery.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

All ranges disclosed herein are inclusive of the endpoints, and the endpoints are independently combinable with each other. Each range disclosed herein constitutes a disclosure of any point or sub-range lying within the disclosed range.

The use of the terms "a" and "an" and "the" and similar referents in the context of describing the invention (especially in the context of the following claims) are to be construed to cover both the singular and the plural, unless otherwise indicated herein or clearly contradicted by context. Further, it should further be noted that the terms "first," "second," and the like herein do not denote any order, quantity, or importance, but rather are used to distinguish one element from another. The modifier "about" used in connection with a quantity is inclusive of the stated value and has the meaning dictated by the context (e.g., it includes the degree of error associated with measurement of the particular quantity).

The invention is further illustrated by the following non-limiting examples.

### EXAMPLES

Components used in these examples are summarized in Table 1.

**Table 1**

| Material | Description |
|---|---|
| PPE 1 | Poly(2,6-dimethyl-1,4-phenylene ether), CAS Reg. No. 25134-01-4, having an intrinsic viscosity of 0.46 deciliter/gram, determined at 25 °C in chloroform by Ubbelohde viscometer; obtained from SABIC as PPO 646. |
| PPE 2 | Poly(2,6-dimethyl-1,4-phenylene ether), CAS Reg. No. 25134-01-4, having an intrinsic viscosity of 0.40 deciliter/gram, determined at 25 °C in chloroform by Ubbelohde viscometer; obtained from SABIC as PPO 640. |
| PPE 3 | Poly(2,6-dimethyl-1,4-phenylene ether), CAS Reg. No. 25134-01-4, having an intrinsic viscosity of 0.33 deciliter/gram, determined at 25 °C in chloroform by Ubbelohde viscometer; obtained from SABIC as PPO 630. |
| PPE-Si | Poly(2,6-dimethyl-1,4-phenylene ether)-polydimethylsiloxane block copolymer reaction product, the reaction product containing a mixture of poly(2,6-dimethyl-1,4-phenylene ether), CAS Reg. No. 25134-01-4, and poly(2,6-dimethyl-1,4-phenylene ether)-polydimethylsiloxane block copolymer, CAS Reg. No. 1202019-56-4; the reaction product having a polydimethylsiloxane content of about 5 weight percent based on the total weight of the reaction product, and an intrinsic viscosity of 0.40 deciliter/gram, determined at 25 °C in chloroform by Ubbelohde viscometer; preparable according to the procedure of U.S. Patent No. 8,017,697 to Carrillo et al., Example 16. |
| HIPS | High-impact polystyrene (styrene-butadiene copolymer), CAS Reg. No. 9003-55-8, having a polystyrene content of 89 weight percent; obtained from Idemitsu as ET60 Resin. |
| BPADP | Bisphenol A bis(diphenyl phosphate), CAS Reg. No. 181028-79-5. |
| RDP | Resorcinol bis(diphenyl phosphate), CAS Reg. No. 57583-54-7. |
| HHR | Hydrogenated hydrocarbon resin (hydrogenated poly(C₆-C₂₀-olefin), CAS Reg. No. 69430-35-9, having a softening point of about 125 °C determined according to ASTM E-28 and a number average molecular weight of about 1150 grams/mole determined by gel permeation chromatography; obtained as ARKON^{™}P-125 from Arakawa Chemical. |
| SBS | Linear polystyrene-polybutadiene-polystyrene triblock copolymer, CAS Reg. No. 694491-73-1, having a polystyrene content of 31 weight percent; obtained as KRATON^{™} D1101 from Kraton Corporation. |
| MAH-SEBS | Polystyrene-poly(ethylene-butylene)-polystyrene triblock copolymer with maleic anhydride grafted onto the poly(ethylene-butylene) midblock, CAS Reg. No. 124578-11-6, having a polystyrene content of 30 weight percent and a bound maleic anhydride content of 1.4 to 2.0 weight percent; obtained as KRATON^{™} FG1901 from Kraton Corporation. |
| Additives | One or more of acid scavengers, metal deactivators, stabilizers, anti-drip agents, and mold release agents. |
| GF Fabric | A woven glass fiber fabric having an average thickness of 100 micrometers and an areal weight of 600 grams/meter² and comprising glass fibers having a fiber diameter of 10-14 micrometers; obtained from Taishan Fiberglass as product |
| | number 920W. |

The composition of a pre-foamed material, designated Resin A, is summarized in Table 2. Component amounts are expressed in weight percent based on the total weight of the composition. The composition was compounded on a 36 millimeter twin-screw extruder operating at barrel temperatures of 200, 230, 260, 260, 280, 280, 280, 285, and 275 °C from feed throat to die, and a die temperature of 275 °C. Extrudates were cooled and pelletized, then dried for 3 hours at 100 °C before use for sheet extrusion.

**Table 2**

| | Resin A |
|---|---|
| COMPOSITION | |
| PPE 1 | 50.00 |
| PPE 2 | 0 |
| HIPS | 30.00 |
| SBS | 2.50 |
| BPADP | 16.50 |
| Additives | 1.00 |

Sheet extrusion of Resin A was conducted on a sheet extrusion apparatus operating at barrel temperatures of 200, 240, 260, 270, 280, 280, 260, 250 °C, and a die temperature of 245 °C. The thickness of the finished, cooled sheet was 5.5 millimeters.

Foaming of the Resin A extruded sheet was conducted using a Jinhe Technology CLJ600 mold compress machine. The machine was pre-heated to 150 °C, after which the Resin A extruded sheet was placed in the cavity of the machine and the mold cavity was closed by a hydraulic system. Supercritical carbon dioxide was then injected into the cavity, and the cavity was maintained at 150 °C and 15 megapascals for 60 minutes. After 60 minutes, pressure was quickly released through an exhaust port and the cavity was opened. The foamed sheet was quickly transferred to a pneumatic flat press shaping machine having upper and lower 30 millimeter thick flat steel plates, where it was cooled and shaped to yield a flat foamed sheet having a thickness of 8 millimeters and a density of 0.12 grams/centimeter³ determined according to ASTM D1622-14.

Summarized in Table 3 are the compositions of materials, designated Resins B-H, that were extruded into thin sheets that were then combined with glass fiber fabric to form prepregs. Component amounts are expressed in weight percent based on the total weight of the composition.

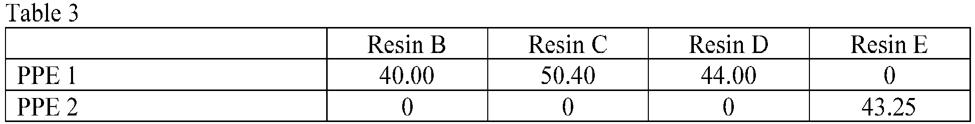

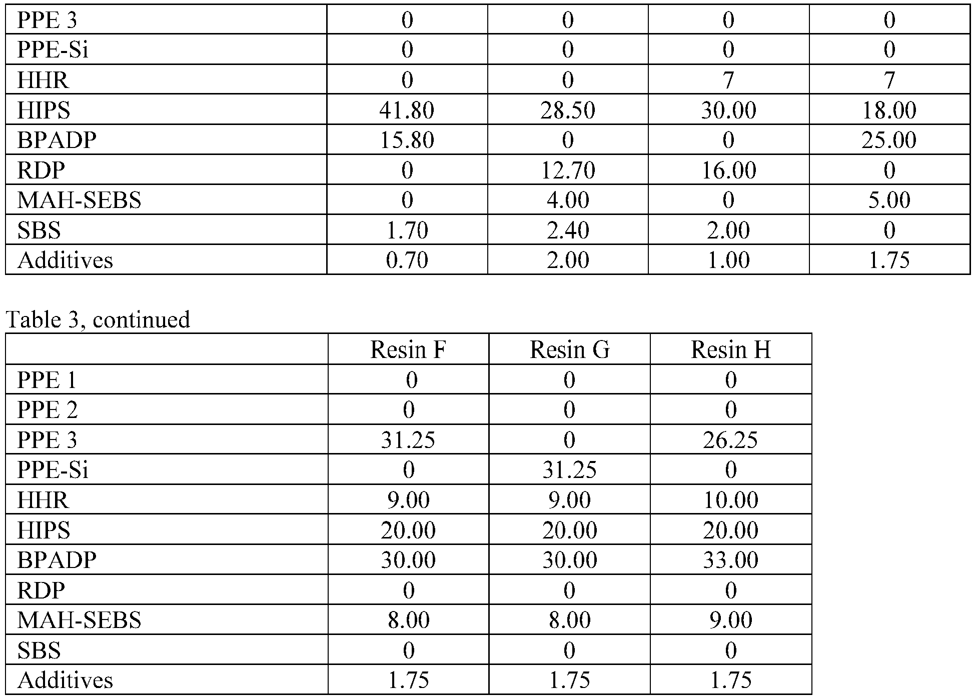

To form prepregs, Resins B-H were first pressed into 0.2 millimeter thick films using a double steel press machine. Two pressed films were then laminated to opposing major faces of a 0.5 millimeter thick woven glass fabric to form a prepreg. This process utilized an apparatus schematically illustrated in Figure 1. The hot press module of the apparatus was maintained at a temperature of 270 °C, and it exerted a pressure of 1.6 megapascals on the sample running through it. The resulting prepreg had a thickness of 0.5 millimeter and an areal weight of 1200 grams/meter²; it contained, based on the total weight of the prepreg, 50 weight percent woven glass fabric, and 50 weight percent of one of Resins B-H.

Table 4 summarizes the properties of the respective prepregs. Property testing utilized a 1 millimeter prepreg prepared by laminating to each other two 0.5 millimeter thick prepregs prepared as described above. Thus, Prepregs A-G were prepared by laminating two layers of Prepregs 1-7, respectively. Flexural strength values (expressed in units of megapascals) and flexural modulus values (expressed in units of gigapascals), were determined according to ASTM D790-17 using a test bar having a thickness (i.e., minimum dimension) corresponding to the thickness of the prepreg. Flame retardancy for prepregs was determined according to Underwriter's Laboratory Bulletin 94 "Tests for Flammability of Plastic Materials, UL 94", 20 mm Vertical Burning Flame Test. Test specimens had a length of 125 millimeters, a width of 13 millimeters, and a thickness of 1 millimeter (i.e., the thickness of the prepreg). Before testing, specimens were conditioned at 23°C and 50% relative humidity for at least 48 hours. Test specimens were oriented so that a cross-section of the sample was exposed to the flame. For each type of laminated foam article, a set of five flame test specimens was tested. For each test specimen, a flame was applied to the test specimen then removed, and the time required for the test specimen to self-extinguish (first afterflame time, t1) was noted. The flame was then reapplied and removed, and the time required for the test specimen to self-extinguish (second afterflame time, t2) and the post-flame glowing time (afterglow time, t3) were noted. To achieve a rating of V-0, the afterflame times t1 and t2 for each individual specimen must have been less than or equal to 10 seconds; and the total afterflame time for all five specimens (t1 plus t2 for all five specimens) must have been less than or equal to 50 seconds; and the second afterflame time plus the afterglow time for each individual specimen (t2 + t3) must have been less than or equal to 30 seconds; and no specimen can have flamed or glowed up to the holding clamp; and the cotton indicator cannot have been ignited by flaming particles or drops. To achieve a rating of V-1, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; and the cotton indicator cannot have been ignited by flaming particles or drops. To achieve a rating of V-2, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; but the cotton indicator can have been ignited by flaming particles or drops. Compositions not achieving a rating of V-2 were considered to have failed. The results in Table 4 show that Prepregs D-F prepared with thermoplastic skin compositions E-H, respectively, exhibited superior flexural strength values, superior flexural modulus values, and superior flame retardancy relative to the Prepregs A-C prepared with thermoplastic skin compositions B-D, respectively.

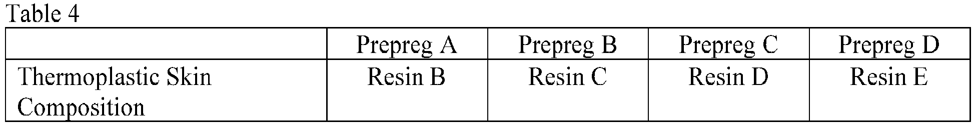

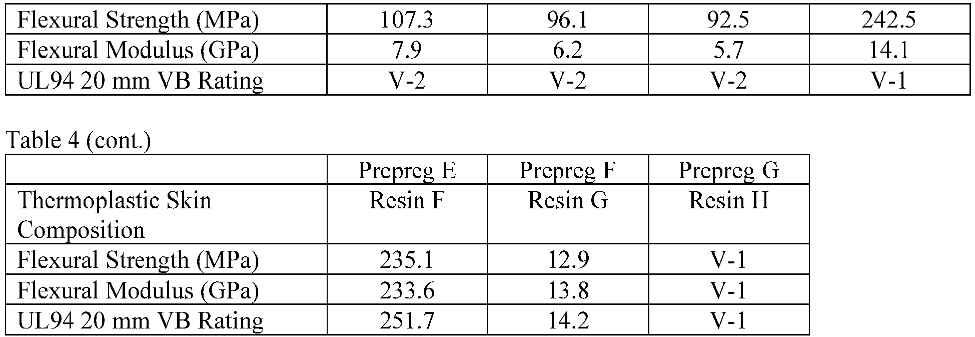

To form the laminated foam article, one layer of each of Prepregs 1-7 was laminated to each of the two opposing major faces of the foamed Resin A sheet. This process utilized an apparatus schematically illustrated in Figure 2. The constant-spacing hot press module of the apparatus was maintained at a steel belt spacing of 7.5 millimeters and a temperature of 270 °C. The resulting laminated foam article had a thickness of 7.5 millimeters, and an areal weight of 2160 grams/meter²; it contained, based on the total weight of the laminated foam article, 35.7 weight percent woven glass fabric, and 64.3 weight percent of a combination of Resin A and one of Resins B-H.

Properties of the laminated foam articles are summarized in Table 5. Flexural strength values (expressed in units of megapascals) and flexural modulus values (expressed in units of gigapascals), were determined according to ASTM D790-17 using a test bar having a thickness (i.e., minimum dimension) corresponding to the thickness of the laminated foam article.

Flame retardancy was determined according to Underwriter's Laboratory Bulletin 94 "Tests for Flammability of Plastic Materials, UL 94", 20 mm Vertical Burning Flame Test. Test specimens had a length of 125 millimeters, a width of 13 millimeters, and a thickness of 7.5 millimeters (i.e., the thickness of the laminated foam article). Before testing, test specimens were conditioned at 23°C and 50% relative humidity for at least 48 hours. Test specimens were oriented so that a cross-section of the sample, including exposed foam, was exposed to the flame. For each type of laminated foam article, a set of five flame test specimens was tested. For each test specimen, a flame was applied to the test specimen then removed, and the time required for the test specimen to self-extinguish (first afterflame time, t1) was noted. The flame was then reapplied and removed, and the time required for the test specimen to self-extinguish (second afterflame time, t2) and the post-flame glowing time (afterglow time, t3) were noted. To achieve a rating of V-0, the afterflame times t1 and t2 for each individual specimen must have been less than or equal to 10 seconds; and the total afterflame time for all five specimens (t1 plus t2 for all five specimens) must have been less than or equal to 50 seconds; and the second afterflame time plus the afterglow time for each individual specimen (t2 + t3) must have been less than or equal to 30 seconds; and no specimen can have flamed or glowed up to the holding clamp; and the cotton indicator cannot have been ignited by flaming particles or drops. To achieve a rating of V-1, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; and the cotton indicator cannot have been ignited by flaming particles or drops. To achieve a rating of V-2, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; but the cotton indicator can have been ignited by flaming particles or drops. Compositions not achieving a rating of V-2 were considered to have failed.

The results in Table 5 show that the Examples 1-4 laminated foam articles prepared with Prepregs 4-7, respectively (which in turn were prepared from thermoplastic skin compositions E-H, respectively) exhibited superior flexural strength values, superior flexural modulus values, and superior flame retardancy relative to the Comparative Examples 1-3 laminated foam articles prepared with Prepregs 1-3, respectively (which in turn were prepared from thermoplastic skin compositions B-D, respectively).

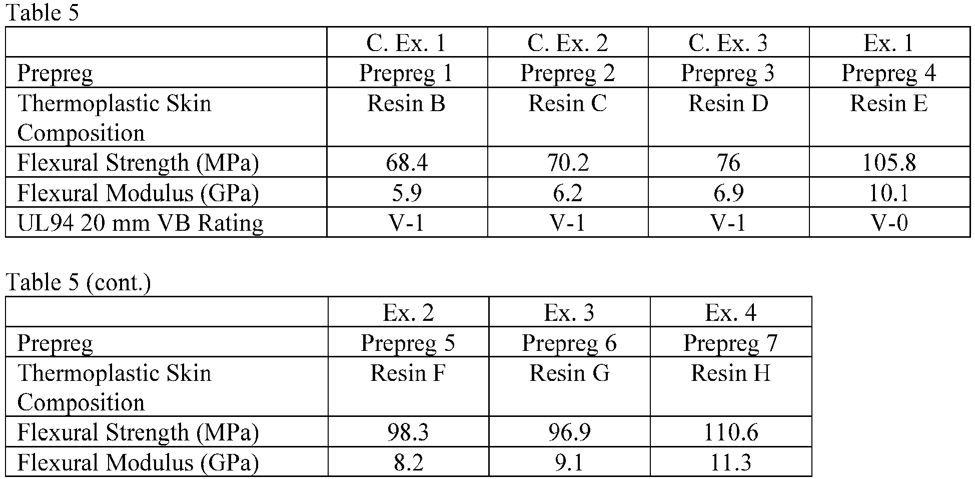

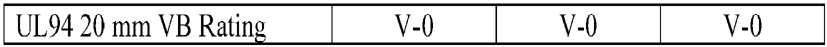

The invention includes at least the following aspects.

Aspect 1: A laminated foam article comprising: a foam core having a thickness of 2 to 40 millimeters and a density of 0.06 to 0.24 grams/centimeter³ determined according to ASTM D1622-14, and comprising a foam composition comprising, based on the total weight of the foam composition, 40 to 79 weight percent of a poly(phenylene ether); 10 to 48 weight percent of a polystyrene, a rubber-modified polystyrene, or a combination thereof; 1 to 10 weight percent of a block copolymer comprising a polystyrene block and a polybutadiene block, a block copolymer comprising a polystyrene block and a hydrogenated polybutadiene block, or a combination thereof; and 10 to 25 weight percent of an organophosphate flame retardant; wherein the sum of the weight percent values of the poly(phenylene ether), the polystyrene or rubber-modified polystyrene or combination thereof, the block copolymer, and the organophosphate flame retardant is 95 to 100 weight percent; and first and second fiber-reinforced skins adhered to opposing major surfaces of the foam core, the first and second fiber-reinforced skins independently having a thickness of 0.2 to 2 millimeters, and independently comprising, based on the total weight of the fiber-reinforced skin, 35 to 65 weight percent of reinforcing fibers selected from the group consisting of glass fibers, carbon fibers, basalt fibers, poly(*para*-phenylene terephthalamide) fibers, and combinations thereof, and 35 to 65 weight percent of a thermoplastic skin composition, the thermoplastic skin compositions of the first and second fiber-reinforced skins independently comprising, based on the total weight of the thermoplastic skin compositions, 22 to 65 weight percent of a thermoplastic resin selected from the group consisting of poly(phenylene ether)s, poly(phenylene ether)-polysiloxane block copolymers, and combinations thereof, wherein the thermoplastic resin has an intrinsic viscosity of 0.28 to 0.5 deciliter/gram, or 0.28 to 0.43 deciliter/gram determined at 25 °C in chloroform by Ubbelohde viscometer; 14 to 26 weight percent of a polystyrene or rubber-modified polystyrene or combination thereof; 14 to 40 weight percent of an organophosphate flame retardant; 4 to 12 weight percent of a hydrogenated hydrocarbon resin; and 3 to 12 weight percent of a maleic anhydride-grafted polystyrene-poly(ethylene-butylene)-polystyrene triblock copolymer; wherein, independently for each of the thermoplastic skin compositions of the first and second fiber-reinforced skins, the sum of the weight percent values of the thermoplastic resin, the polystyrene or rubber-modified polystyrene or combination thereof, the organophosphate flame retardant, the hydrogenated hydrocarbon resin, and the maleic anhydride-grafted polystyrene-poly(ethylene-butylene)-polystyrene triblock copolymer is 95 to 100 weight percent.

Aspect 2: The laminated foam article of aspect 1, wherein the foam composition comprises 45 to 55 weight percent of a poly(2,6-dimethyl-1,4-phenylene ether) having an intrinsic viscosity of 0.42 to 0.50 deciliter/gram determined at 25 °C in chloroform by Ubbelohde viscometer; 25 to 35 weight percent of the rubber-modified polystyrene; 1 to 5 weight percent of a polystyrene-polybutadiene-polystyrene triblock copolymer; and 12 to 22 weight percent of the organophosphate flame retardant.

Aspect 3: The laminated foam article of aspect 1 or 2, wherein the thermoplastic resin is a poly(2,6-dimethyl-1,4-phenylene ether) having an intrinsic viscosity of 0.3 to 0.45 deciliter/gram determined at 25 °C in chloroform by Ubbelohde viscometer.

Aspect 4: The laminated foam article of any one of aspects 1-3, wherein the hydrogenated hydrocarbon resin comprises a hydrogenated poly(C₆-C₂₀-olefin) having a softening point of 105 to 145 °C, determined according to ASTM E28-18.

Aspect 5: The laminated foam article of any one of aspects 1-4, wherein the maleic anhydride-grafted polystyrene-poly(ethylene-butylene)-polystyrene triblock copolymer has a polystyrene content of 15 to 45 weight percent and a bound maleic anhydride content of 0.5 to 4 weight percent, based on the total weight of the maleic anhydride-grafted polystyrene-poly(ethylene-butylene)-polystyrene triblock copolymer.

Aspect 6: The laminated foam article of aspect 1, wherein the reinforcing fibers are in the form of a woven glass fiber fabric; wherein the thermoplastic skin compositions of the first and second fiber-reinforced skins independently comprise 30 to 50 weight percent of the thermoplastic resin; 16 to 24 weight percent of the rubber-modified polystyrene; 20 to 35 weight percent of the organophosphate flame retardant; 5 to 12 weight percent of the hydrogenated hydrocarbon resin; and 3 to 11 weight percent of the maleic anhydride-grafted polystyrene-poly(ethylene-butylene)-polystyrene triblock copolymer; wherein the thermoplastic resin comprises a poly(2,6-dimethyl-1,4-phenylene ether) having an intrinsic viscosity of 0.3 to 0.43 deciliter/gram determined at 25 °C in chloroform by Ubbelohde viscometer; wherein the rubber-modified polystyrene comprises 80 to 95 weight percent of polystyrene and 5 to 20 weight percent of polybutadiene, based on the total weight of the rubber-modified polystyrene; wherein the hydrogenated hydrocarbon resin comprises a hydrogenated poly(C₆-C₂₀-olefin) having a number average molecular weight of 400 to 4,000 grams/mole, determined by gel permeation chromatography using polyethylene standards; and wherein the maleic anhydride-grafted polystyrene-poly(ethylene-butylene)-polystyrene triblock copolymer has a polystyrene content of 15 to 45 weight percent and a bound maleic anhydride content of 0.5 to 4 weight percent, based on the total weight of the maleic anhydride-grafted polystyrene-poly(ethylene-butylene)-polystyrene triblock copolymer.

Aspect 7: The laminated foam article of aspect 6, wherein the foam composition comprises 45 to 55 weight percent of a poly(2,6-dimethyl-1,4-phenylene ether) having an intrinsic viscosity of 0.42 to 0.50 deciliter/gram determined at 25 °C in chloroform by Ubbelohde viscometer; 25 to 35 weight percent of a rubber-modified polystyrene; 1 to 5 weight percent of a polystyrene-polybutadiene-polystyrene triblock copolymer; and 12 to 22 weight percent of the organophosphate flame retardant.

Aspect 8: A method of forming a laminated foam article comprising: thermally laminating first and second prepregs to opposing major surfaces of a foam core to form a laminated foam article comprising the foam core and first and second fiber-reinforced skins adhered, respectively, to opposing major surfaces of the foam core; wherein the foam core has a thickness of 2 to 40 millimeters and a density of 0.06 to 0.24 grams/centimeter³ determined according to ASTM D1622-14, and comprises a foam composition comprising, based on the total weight of the foam composition, 40 to 79 weight percent of a poly(phenylene ether); 10 to 48 weight percent of a polystyrene, a rubber-modified polystyrene, or a combination thereof; 1 to 10 weight percent of a block copolymer comprising a polystyrene block and a polybutadiene block, a block copolymer comprising a polystyrene block and a hydrogenated polybutadiene block, or a combination thereof; and 10 to 25 weight percent of an organophosphate flame retardant; wherein the sum of the weight percent values of the poly(phenylene ether), the polystyrene or rubber-modified polystyrene or combination thereof, the block copolymer, and the organophosphate flame retardant is 95 to 100 weight percent; and wherein the first and second prepregs independently have a thickness of 0.2 to 2 millimeters, and independently comprise 35 to 65 weight percent of reinforcing fibers selected from the group consisting of glass fibers, carbon fibers, basalt fibers, poly(*para*-phenylene terephthalamide) fibers, and combinations thereof, and 35 to 65 weight percent of a thermoplastic skin composition, the thermoplastic skin compositions of the first and second prepregs independently comprising, based on the total weight of the thermoplastic skin compositions, 22 to 65 weight percent of a thermoplastic resin selected from the group consisting of poly(phenylene ether)s, poly(phenylene ether)-polysiloxane block copolymers, and combinations thereof, wherein the thermoplastic resin has an intrinsic viscosity of 0.28 to 0.5 deciliter/gram, or 0.28 to 0.43 deciliter/gram, determined at 25 °C in chloroform by Ubbelohde viscometer; 14 to 26 weight percent of a rubber-modified polystyrene; 14 to 40 weight percent of an organophosphate flame retardant; 4 to 12 weight percent of a hydrogenated hydrocarbon resin; and 3 to 12 weight percent of a maleic anhydride-grafted polystyrene-poly(ethylene-butylene)-polystyrene triblock copolymer; wherein, independently for each of the thermoplastic skin compositions of the first and second prepregs, the sum of the weight percent values of the thermoplastic resin, the polystyrene or rubber-modified polystyrene or combination thereof, the hydrogenated hydrocarbon resin, the organophosphate flame retardant, and the maleic anhydride-grafted polystyrene-poly(ethylene-butylene)-polystyrene triblock copolymer is 95 to 100 weight percent.

Aspect 9: The method of aspect 8, wherein the thermally laminating the first and second prepregs to opposing major surfaces of a foam core comprises contacting the first and second prepregs, respectively, with opposing major surfaces of the foam core to form a sandwich structure; and exposing the sandwich structure to a temperature of 250 to 290 °C and a pressure of 0.8 to 3.2 megapascals for a time of 5 to 50 seconds to adhere the first and second prepregs to the foam core, thereby forming the laminated foam article.

Aspect 10: The method of aspect 8 or 9, wherein the foam composition comprises 45 to 55 weight percent of a poly(2,6-dimethyl-1,4-phenylene ether) having an intrinsic viscosity of 0.42 to 0.50 deciliter/gram determined at 25 °C in chloroform by Ubbelohde viscometer; 25 to 35 weight percent of a rubber-modified polystyrene; 1 to 5 weight percent of a block copolymer comprising a polystyrene block and a polybutadiene block; and 12 to 22 weight percent of the organophosphate flame retardant.

Aspect 11: The method of any one of aspects 8-10, wherein the thermoplastic resin is a poly(2,6-dimethyl-1,4-phenylene ether) having an intrinsic viscosity of 0.3 to 0.45 deciliter/gram determined at 25 °C in chloroform by Ubbelohde viscometer.

Aspect 12: The method of any one of aspects 8-11, wherein the hydrogenated hydrocarbon resin comprises a hydrogenated poly(C₆-C₂₀-olefin) having a softening point of 105 to 145 °C, determined according to ASTM E28-18.

Aspect 13: The method of any one of aspects 8-12, wherein the maleic anhydride-grafted polystyrene-poly(ethylene-butylene)-polystyrene triblock copolymer has a polystyrene content of 15 to 45 weight percent and a bound maleic anhydride content of 0.5 to 4 weight percent, based on the total weight of the maleic anhydride-grafted polystyrene-poly(ethylene-butylene)-polystyrene triblock copolymer.

Aspect 14: The method of aspect 8, wherein the reinforcing fibers are in the form of a woven glass fiber fabric; wherein the thermoplastic skin compositions of the first and second fiber-reinforced skins independently comprise 30 to 50 weight percent of the thermoplastic resin; 16 to 24 weight percent of the rubber-modified polystyrene; 20 to 35 weight percent of the organophosphate flame retardant; 5 to 12 weight percent of the hydrogenated hydrocarbon resin; and 3 to 11 weight percent of the maleic anhydride-grafted polystyrene-poly(ethylene-butylene)-polystyrene triblock copolymer; wherein the thermoplastic resin comprises a poly(2,6-dimethyl-1,4-phenylene ether) having an intrinsic viscosity of 0.3 to 0.43 deciliter/gram determined at 25 °C in chloroform by Ubbelohde viscometer; wherein the rubber-modified polystyrene comprises 80 to 95 weight percent of polystyrene and 5 to 20 weight percent of polybutadiene, based on the total weight of the rubber-modified polystyrene; wherein the hydrogenated hydrocarbon resin comprises a hydrogenated poly(C₆-C₂₀-olefin) having a number average molecular weight of 400 to 4,000 grams/mole, determined by gel permeation chromatography using polyethylene standards; and wherein the maleic anhydride-grafted polystyrene-poly(ethylene-butylene)-polystyrene triblock copolymer has a polystyrene content of 15 to 45 weight percent and a bound maleic anhydride content of 0.5 to 4 weight percent, based on the total weight of the maleic anhydride-grafted polystyrene-poly(ethylene-butylene)-polystyrene triblock copolymer.

Aspect 15: An electric vehicle battery pack comprising an electric battery and the laminated foam article of any one of aspects 1-7.

## Claims

1. A laminated foam article comprising:
a foam core having a thickness of 2 to 40 millimeters and a density of 0.06 to 0.24 grams/centimeter³ determined according to ASTM D1622-14, and comprising a foam composition comprising, based on the total weight of the foam composition,
40 to 79 weight percent of a poly(phenylene ether);
10 to 48 weight percent of a polystyrene, a rubber-modified polystyrene, or a combination thereof;
1 to 10 weight percent of a block copolymer comprising a polystyrene block and a polybutadiene block, a block copolymer comprising a polystyrene block and a hydrogenated polybutadiene block, or a combination thereof; and
10 to 25 weight percent of an organophosphate flame retardant;
wherein the sum of the weight percent values of the poly(phenylene ether), the polystyrene or rubber-modified polystyrene or combination thereof, the block copolymer, and the organophosphate flame retardant is 95 to 100 weight percent; and
first and second fiber-reinforced skins adhered to opposing major surfaces of the foam core, the first and second fiber-reinforced skins independently having a thickness of 0.2 to 2 millimeters, and independently comprising, based on the total weight of the fiber-reinforced skin,
35 to 65 weight percent of reinforcing fibers selected from the group consisting of glass fibers, carbon fibers, basalt fibers, poly(*para*-phenylene terephthalamide) fibers, and combinations thereof, and
35 to 65 weight percent of a thermoplastic skin composition,
the thermoplastic skin compositions of the first and second fiber-reinforced skins independently comprising, based on the total weight of the thermoplastic skin compositions,
22 to 65 weight percent of a thermoplastic resin selected from the group consisting of poly(phenylene ether)s, poly(phenylene ether)-polysiloxane block copolymers, and combinations thereof, wherein the thermoplastic resin has an intrinsic viscosity of 0.28 to 0.5 deciliter/gram determined at 25 °C in chloroform by Ubbelohde viscometer;
14 to 26 weight percent of a polystyrene, a rubber-modified polystyrene, or a combination thereof;
14 to 40 weight percent of an organophosphate flame retardant;
4 to 12 weight percent of a hydrogenated hydrocarbon resin; and
3 to 12 weight percent of a maleic anhydride-grafted polystyrene-poly(ethylene-butylene)-polystyrene triblock copolymer;
wherein, independently for each of the thermoplastic skin compositions of the first and second fiber-reinforced skins, the sum of the weight percent values of the thermoplastic resin, the polystyrene or rubber-modified polystyrene or combination thereof, the organophosphate flame retardant, the hydrogenated hydrocarbon resin, and the maleic anhydride-grafted polystyrene-poly(ethylene-butylene)-polystyrene triblock copolymer is 95 to 100 weight percent.

2. The laminated foam article of claim 1, wherein the foam composition comprises
45 to 55 weight percent of a poly(2,6-dimethyl-1,4-phenylene ether) having an intrinsic viscosity of 0.42 to 0.50 deciliter/gram determined at 25 °C in chloroform by Ubbelohde viscometer;
25 to 35 weight percent of the rubber-modified polystyrene;
1 to 5 weight percent of a polystyrene-polybutadiene-polystyrene triblock copolymer; and
12 to 22 weight percent of the organophosphate flame retardant.

3. The laminated foam article of claim 1 or 2, wherein the thermoplastic resin is a poly(2,6-dimethyl-1,4-phenylene ether) having an intrinsic viscosity of 0.3 to 0.45 deciliter/gram determined at 25 °C in chloroform by Ubbelohde viscometer.

4. The laminated foam article of any one of claims 1-3, wherein the hydrogenated hydrocarbon resin comprises a hydrogenated poly(C₆-C₂₀-olefin) having a softening point of 105 to 145 °C, determined according to ASTM E28-18.

5. The laminated foam article of any one of claims 1-4, wherein the maleic anhydride-grafted polystyrene-poly(ethylene-butylene)-polystyrene triblock copolymer has a polystyrene content of 15 to 45 weight percent and a bound maleic anhydride content of 0.5 to 4 weight percent, based on the total weight of the maleic anhydride-grafted polystyrene-poly(ethylene-butylene)-polystyrene triblock copolymer.

6. The laminated foam article of claim 1,
wherein the reinforcing fibers are in the form of a woven glass fiber fabric;
wherein the thermoplastic skin compositions of the first and second fiber-reinforced skins independently comprise
30 to 50 weight percent of the thermoplastic resin;
16 to 24 weight percent of the rubber-modified polystyrene;
20 to 35 weight percent of the organophosphate flame retardant;
5 to 12 weight percent of the hydrogenated hydrocarbon resin; and
3 to 11 weight percent of the maleic anhydride-grafted polystyrene-poly(ethylene-butylene)-polystyrene triblock copolymer;
wherein the thermoplastic resin comprises a poly(2,6-dimethyl-1,4-phenylene ether) having an intrinsic viscosity of 0.3 to 0.43 deciliter/gram determined at 25 °C in chloroform by Ubbelohde viscometer;
wherein the rubber-modified polystyrene comprises 80 to 95 weight percent of polystyrene and 5 to 20 weight percent of polybutadiene, based on the total weight of the rubber-modified polystyrene;
wherein the hydrogenated hydrocarbon resin comprises a hydrogenated poly(C₆-C₂₀-olefin) having a number average molecular weight of 400 to 4,000 grams/mole, determined by gel permeation chromatography using polyethylene standards; and
wherein the maleic anhydride-grafted polystyrene-poly(ethylene-butylene)-polystyrene triblock copolymer has a polystyrene content of 15 to 45 weight percent and a bound maleic anhydride content of 0.5 to 4 weight percent, based on the total weight of the maleic anhydride-grafted polystyrene-poly(ethylene-butylene)-polystyrene triblock copolymer.

7. The laminated foam article of claim 6, wherein the foam composition comprises
45 to 55 weight percent of a poly(2,6-dimethyl-1,4-phenylene ether) having an intrinsic viscosity of 0.42 to 0.50 deciliter/gram determined at 25 °C in chloroform by Ubbelohde viscometer;
25 to 35 weight percent of a rubber-modified polystyrene;
1 to 5 weight percent of a polystyrene-polybutadiene-polystyrene triblock copolymer; and
12 to 22 weight percent of the organophosphate flame retardant.

8. A method of forming a laminated foam article comprising:
thermally laminating first and second prepregs to opposing major surfaces of a foam core to form a laminated foam article comprising the foam core and first and second fiber-reinforced skins adhered, respectively, to opposing major surfaces of the foam core;
wherein the foam core has a thickness of 2 to 40 millimeters and a density of 0.06 to 0.24 grams/centimeter³ determined according to ASTM D1622-14, and comprises a foam composition comprising, based on the total weight of the foam composition,
40 to 79 weight percent of a poly(phenylene ether);
10 to 48 weight percent of a polystyrene, a rubber-modified polystyrene, or a combination thereof;
1 to 10 weight percent of a block copolymer comprising a polystyrene block and a polybutadiene block, a block copolymer comprising a polystyrene block and a hydrogenated polybutadiene block, or a combination thereof; and
10 to 25 weight percent of an organophosphate flame retardant;
wherein the sum of the weight percent values of the poly(phenylene ether), the polystyrene or rubber-modified polystyrene or combination thereof, the block copolymer, and the organophosphate flame retardant is 95 to 100 weight percent; and
wherein the first and second prepregs independently have a thickness of 0.2 to 2 millimeters, and independently comprise
35 to 65 weight percent of reinforcing fibers selected from the group consisting of glass fibers, carbon fibers, basalt fibers, poly(*para*-phenylene terephthalamide) fibers, and combinations thereof, and
35 to 65 weight percent of a thermoplastic skin composition,
the thermoplastic skin compositions of the first and second prepregs independently comprising, based on the total weight of the thermoplastic skin compositions,
22 to 65 weight percent of a thermoplastic resin selected from the group consisting of poly(phenylene ether)s, poly(phenylene ether)-polysiloxane block copolymers, and combinations thereof, wherein the thermoplastic resin has an intrinsic viscosity of 0.28 to 0.5 deciliter/gram determined at 25 °C in chloroform by Ubbelohde viscometer;
14 to 26 weight percent of a polystyrene or rubber-modified polystyrene or combination thereof;
14 to 40 weight percent of an organophosphate flame retardant;
4 to 12 weight percent of a hydrogenated hydrocarbon resin; and
3 to 12 weight percent of a maleic anhydride-grafted polystyrene-poly(ethylene-butylene)-polystyrene triblock copolymer;
wherein, independently for each of the thermoplastic skin compositions of the first and second prepregs, the sum of the weight percent values of the thermoplastic resin, the polystyrene or rubber-modified polystyrene or combination thereof, the hydrogenated hydrocarbon resin, the organophosphate flame retardant, and the maleic anhydride-grafted polystyrene-poly(ethylenebutylene)-polystyrene triblock copolymer is 95 to 100 weight percent.

9. The method of claim 8, wherein the thermally laminating the first and second prepregs to opposing major surfaces of a foam core comprises
contacting the first and second prepregs, respectively, with opposing major surfaces of the foam core to form a sandwich structure; and
exposing the sandwich structure to a temperature of 250 to 290 °C and a pressure of 0.8 to 3.2 megapascals for a time of 5 to 50 seconds to adhere the first and second prepregs to the foam core, thereby forming the laminated foam article.

10. The method of claim 8 or 9, wherein the foam composition comprises
45 to 55 weight percent of a poly(2,6-dimethyl-1,4-phenylene ether) having an intrinsic viscosity of 0.42 to 0.50 deciliter/gram determined at 25 °C in chloroform by Ubbelohde viscometer;
25 to 35 weight percent of a rubber-modified polystyrene;
1 to 5 weight percent of a block copolymer comprising a polystyrene block and a polybutadiene block; and
12 to 22 weight percent of the organophosphate flame retardant.

11. The method of any one of claims 8-10, wherein the thermoplastic resin is a poly(2,6-dimethyl-1,4-phenylene ether) having an intrinsic viscosity of 0.3 to 0.45 deciliter/gram determined at 25 °C in chloroform by Ubbelohde viscometer.

12. The method of any one of claims 8-11, wherein the hydrogenated hydrocarbon resin comprises a hydrogenated poly(C₆-C₂₀-olefin) having a softening point of 105 to 145 °C, determined according to ASTM E28-18.

13. The method of any one of claims 8-12, wherein the maleic anhydride-grafted polystyrene-poly(ethylene-butylene)-polystyrene triblock copolymer has a polystyrene content of 15 to 45 weight percent and a bound maleic anhydride content of 0.5 to 4 weight percent, based on the total weight of the maleic anhydride-grafted polystyrene-poly(ethylene-butylene)-polystyrene triblock copolymer.

14. The method of claim 8,
wherein the reinforcing fibers are in the form of a woven glass fiber fabric;
wherein the thermoplastic skin compositions of the first and second fiber-reinforced skins independently comprise
30 to 50 weight percent of the thermoplastic resin;
16 to 24 weight percent of the rubber-modified polystyrene;
20 to 35 weight percent of the organophosphate flame retardant;
5 to 12 weight percent of the hydrogenated hydrocarbon resin; and
3 to 11 weight percent of the maleic anhydride-grafted polystyrene-poly(ethylene-butylene)-polystyrene triblock copolymer;
wherein the thermoplastic resin comprises a poly(2,6-dimethyl-1,4-phenylene ether) having an intrinsic viscosity of 0.3 to 0.43 deciliter/gram determined at 25 °C in chloroform by Ubbelohde viscometer;
wherein the rubber-modified polystyrene comprises 80 to 95 weight percent of polystyrene and 5 to 20 weight percent of polybutadiene, based on the total weight of the rubber-modified polystyrene;
wherein the hydrogenated hydrocarbon resin comprises a hydrogenated poly(C₆-C₂₀-olefin) having a number average molecular weight of 400 to 4,000 grams/mole, determined by gel permeation chromatography using polyethylene standards; and
wherein the maleic anhydride-grafted polystyrene-poly(ethylene-butylene)-polystyrene triblock copolymer has a polystyrene content of 15 to 45 weight percent and a bound maleic anhydride content of 0.5 to 4 weight percent, based on the total weight of the maleic anhydride-grafted polystyrene-poly(ethylene-butylene)-polystyrene triblock copolymer.

15. An electric vehicle battery pack comprising an electric battery and the laminated foam article of any one of claims 1-7.
